# EUROPÄISCHE PATENTSCHRIFT

(11) **EP 3 235 666 B1**
(45) Veröffentlichungstag und Bekanntmachung des Hinweises auf die Patenterteilung: **18.03.2020**
(21) Anmeldenummer: 16165708.5
(22) Anmeldetag: 18.04.2016
(51) Int. Cl.: B60D 5/00, B61D 17/22, B62D 47/02

(54) **BALG EINES ÜBERGANGS ZWISCHEN ZWEI GELENKIG MITEINANDER VERBUNDENER FAHRZEUGE ODER BALG EINER FLUGGASTTREPPE ODER -BRÜCKE**
BELLOWS OF AN INTERSECTION BETWEEN TWO ARTICULATED VEHICLES OR BELLOWS FOR AN AIR PASSENGER BOARDING BRIDGE OR STEPS
SOUFFLET D'UN PASSAGE ENTRE DEUX VEHICULES RELIES DE MANIERE ARTICULEE OU SOUFFLET DE PASSERELLE OU ESCALIER D'EMBARQUEMENT

(43) Veröffentlichungstag der Anmeldung: 25.10.2017
(73) Patentinhaber: Hübner GmbH & Co. KG, 34123 Kassel (DE)
(72) Erfinder: Tatzel, Stefan, 34277 Fuldabrück (DE); Krug, Günter, 34302 Guxhagen (DE); Bingenmann, Rolf, 37284 Waldkappel (DE)
(74) Vertreter: Patentanwälte Walther Hinz Bayer PartGmbB

(56) Entgegenhaltungen:
- EP-A1- 2 805 812
- DE-A1-102004 043 193
- DE-U1-202013 000 165
- JP-A- 2006 176 056

## Beschreibung

Die Erfindung betrifft einen Balg eines Übergangs zwischen zwei gelenkig miteinander verbundener Fahrzeuge oder Balg einer Fluggasttreppe oder -brücke mit mehreren hintereinander angeordneten Falten oder Wellen, wobei die Falten oder Wellen des Balges zumindest im Bodenbereich mindestens einen Innenmantel und mindestens einen dazu beabstandet angeordneten Außenmantel aufweisen, wobei zwischen Außen- und Innenmantel ein feuerhemmendes Material vorgesehen ist.

Grundsätzlich wird unterschieden zwischen schienengebundenen Gelenkfahrzeugen, wie z. B. Straßenbahnzügen oder Eisenbahnzügen und straßengebundenen Gelenkfahrzeugen, wie z. B. Gelenkomnibussen. Die gelenkig miteinander verbundenen Fahrzeugteile, beispielsweise eines Schienenfahrzeuges oder eines Gelenkomnibusses, weisen einen Übergang auf, der mindestens einen Balg umfasst, der den Boden des Übergangs und gegebenenfalls auch das Gelenk tunnelförmig umgibt, um Personen über den Boden den Wechsel von dem einen Fahrzeugteil zum anderen Fahrzeugteil zu ermöglichen, ohne dass diese Witterungseinflüssen ausgesetzt sind. In diesem Zusammenhang ist anzumerken, dass die Bälge als Falten- oder Wellenbälge ausgebildet sind, wobei insbesondere Wellenbälge bei schienengebundenen Fahrzeugen und Faltenbälge bei Gelenkomnibussen zum Einsatz kommen. Ein solches Fahrzeug ist beispielsweise in der DE 20 2013 000 165 U1 beschrieben.

Bei schienengebundenen Fahrzeugen, wie insbesondere Eisenbahnzügen, ist der Boden beispielsweise als Gliederbrücke ausgebildet. Derartige Gliederbrücken sind aus dem Stand der Technik hinreichend bekannt. Darüber hinaus ist auch bekannt, den Boden als Plattform auszubilden, wobei der Einsatz von Plattformen üblicherweise bei Gelenkomnibussen bekannt ist. Insbesondere bei Schienenfahrzeugen besteht nunmehr die Forderung, dass im Bereich des Übergangs der Boden des Übergangs, beispielsweise eine Gliederbrücke, einen gewissen Widerstand gegen die Einwirkung von Feuer aufweist. Das heißt, auf der Oberseite des Bodens des Übergangs soll über einen bestimmten Zeitraum eine bestimmte Temperatur nicht überschritten werden.

Nun wurde bereits zu eingangs darauf hingewiesen, dass der Balg den Boden des Übergangs tunnelförmig umgibt, das heißt, der Boden des Übergangs durch den Balg auch auf der Unterseite abgedeckt ist. Der Balg bildet somit eine Röhre. Das heißt, der Bodenbereich des Balges befindet sich unterhalb des Bodens des Überganges, beispielsweise einer Gliederbrücke. Der Brandherd befindet sich nun unterhalb des Bodenbereichs des Balges, sodass der Boden des Übergangs nicht unmittelbar dem Feuer ausgesetzt ist. Hieraus wird deutlich, dass mit einer brandhemmenden Ausgestaltung des Balges zumindest im Bodenbereich des Balges die Erwärmung des Bodens des Überganges über einen bestimmten Zeitraum verzögert werden kann.

In diesem Zusammenhang ist beispielsweise aus der DE 20 2015 105 102 U1 der Aufbau eines Balges bekannt, wobei eine äußere Festigkeitslage vorgesehen ist, auf der auf der Innenseite eine Flammschutzlage angeordnet ist. Auf dieser Flammschutzlage kann wiederum eine weitere Festigkeitslage angeordnet sein.

Aus der DE 10 2004 043 193 A1 ist ein mehrlagiges Textil bekannt, das zu beiden Seiten eine flammfeste elastische Beschichtung aufweist. Das mehrlagige Textil kann hierbei aus einem flammfesten Material bestehen und zur Herstellung eines Falten- oder Wellenbalges verwendet werden.

Die JP 2006-176056 A beschreibt ein Tuch bestehend aus zwei äußeren aus elastischem Material hergestellten Lagen, wobei zwischen den Lagen eine Zwischenschicht aus flammhemmendem Material angeordnet ist. In der Zwischenschicht ist eine Gewebelage eingelagert.

Aus der EP 1990563 A1 ist ein zweilagiger Aufbau eines Balges bekannt, wobei die einzelnen Falten oder Wellen eines solchen Balges zur Bildung eines zweilagigen Aufbaus einen Außenmantel und einen Innenmantel aufweisen, die beabstandet zueinander angeordnet sind. Hierbei ist vorgesehen, zwischen Innenmantel und Außenmantel eine Brandschutzeinlage aus intumeszierendem Material anzuordnen. Mit einer solchen Ausgestaltung des Balges, insbesondere des Balgbodens, sind bereits gute Ergebnisse hinsichtlich einer verzögerten Erwärmung auf der Oberseite des Bodens des Übergangs erzielt worden.

Allerdings sind die Anforderungen an den Brandschutz in den letzten Jahren gesteigert worden, wobei insbesondere der Zeitraum innerhalb der eine bestimmte Temperatur auf der Oberseite des Bodens des Übergangs nicht überschritten werden darf, erhöht wurde.

Die der Erfindung zugrunde liegende Aufgabe besteht darin, einen Balg der eingangs genannten Art bereitzustellen, der auch unter dem Boden eines Übergangs verläuft, und der verhindert, dass die Temperatur auf der Bodenoberseite innerhalb eines bestimmten Zeitraumes einen bestimmten vorgegebenen Wert überschreitet.

Zur Lösung der Aufgabe ist erfindungsgemäß vorgesehen, dass zwischen Innen- und Außenmantel des Balges beabstandet zum Innenmantel und zum Außenmantel eine wellen- oder faltenförmige Zwischenlage angeordnet ist, wobei die Zwischenlage feuer- oder flammhemmend ausgebildet ist. Es hat sich herausgestellt, dass dadurch, dass mit drei Lagen eines Balges bzw. zumindest eines Balgbodens, wobei die einzelnen Lagen beabstandet zueinander angeordnet sind, und die wellen- oder faltenförmige Zwischenlage aus einem feuerhemmenden bzw. flammhemmenden Material ausgebildet ist, eine wesentliche Verzögerung des Temperaturanstiegs auf der Oberseite des Bodens des Übergangs erreicht werden kann.

Vorteilhafte Merkmale und Ausgestaltungen zu der Erfindung ergeben sich aus den Unteransprüchen.

So ist insbesondere vorgesehen, dass die feuerhemmende Zwischenlage als Brandschutzgewebe, -gewirk oder -gestrick ausgebildet ist. Das heißt, die feuerhemmende Zwischenlage kann beispielsweise nach einem besonderen Merkmal der Erfindung als Drahtgeflecht ausgebildet sein; denkbar ist allerdings auch, die feuerhemmende Zwischenlage als Aramidfaser-, Silikatfaser-, Glasfaser- und/oder Polybenzimidazolfaserbasiertes Gewebe, Gewirk oder Gestrick auszubilden. Eine solche Zwischenlage wirkt ähnlich einer Brandschutzwand und sorgt für eine signifikant verzögerte Aufheizung der Oberseite des Bodens eines Überganges. Denkbar sind auch Kombinationen aus den vorgenannten Stoffen für die Zwischenlage, also z. B. ein Geflecht aus Draht und Glasfasern.

Als besonders vorteilhaft hat sich herausgestellt, wenn die wellen- oder faltenförmige Zwischenlage eine Brandschutzauflage oder eine Brandschutzeinlage aufweist.

Insbesondere hat sich herausgestellt, dass eine signifikante Verzögerung der Erwärmung der Oberseite des Bodens des Überganges dann erreicht wird, wenn die Brandschutzeinlage oder Brandschutzauflage aufblähend, und hier insbesondere unter Bildung eines Ascheskeletts, aufblähend ausgebildet ist. Das heißt, die Brandschutzeinlage oder Brandschutzauflage weist ein aufblähendes Material auf.

Es wurde an anderer Stelle darauf hingewiesen, dass aus der bereits abgehandelten EP 1 990 563 A1 ein zweilagiger Aufbau eines Balges mit einem Innenmantel und einem beabstandet dazu angeordneten Außenmantel bekannt ist, wobei zwischen Außenmantel und Innenmantel ein intumeszierendes Material, z. B. als Kissen, angeordnet ist. Ein intumeszierendes Material hat blähende Eigenschaften. Das heißt, dass das Material unter Hitzeeinwirkung stark Volumen vergrößernd ausgebildet ist. Hierbei wird unterschieden zwischen drucklos aufblähendem intumeszierendem Material und solchem, das unter Druck aufbläht. Sowohl dem drucklos als auch dem unter Druck aufblähenden Material der Brandschutzeinlage ist jedoch gemein, dass wesentlich für die Einhaltung der Brandschutzanforderungen die Ausbildung eines Ascheskeletts ist. Dieses Ascheskelett besteht aus der sich aufblähenden Brandschutzeinlage einerseits und den Resten der Balgstoffe andererseits und ist verhältnismäßig instabil. Es neigt insofern dazu, in sich zusammenzubrechen. Sobald dies geschieht, das heißt, dass das die Dämmschicht bildende Aschegerüst oder Ascheskelett in sich zusammengebrochen ist, erhöht sich die Oberflächentemperatur auf der Oberseite des Bodens des Überganges innerhalb kurzer Zeit signifikant. Es wurde bereits darauf hingewiesen, dass es drucklos aufblähende Materialien gibt, und solche, die unter Druck aufblähen. Bei unter Druck aufblähenden, intumeszierenden Materialien besteht die Gewähr, dass das Material einen vorbestimmten Raum vollständig ausfüllt. Das heißt, der Raum zwischen der Zwischenlage und dem Innenmantel wird vollständig durch das Ascheskelett ausgefüllt, wobei durch den Aufblähvorgang der Innenmantel des Balges in Richtung des Durchgangs auswölbt und der Raum insofern sein Volumen vergrößert. Würde man ein solches Material bei einem Balgaufbau gemäß der EP 1 990 563 A1 einsetzen, dann kommt es aufgrund des Druckaufbaus beim Blähvorgang in Verbindung mit der Beanspruchung des Außenmantels durch den Brandherd relativ schnell zu einem Bruch des Außenmantels des Balges. Die unmittelbare Folge hiervon ist, dass das Ascheskelett in sich zusammenbricht, und nach unten fällt. Im unmittelbaren Anschluss daran ist der Innenmantel der einzelnen Falten oder Wellen des Balges einer unmittelbaren Beflammung ausgesetzt, was relativ zügig zur Zerstörung des Innenmantels führt, sodass dann der Boden des Übergangs selbst der Flammbelastung ausgesetzt ist. Die Folge hiervon ist, dass die zulässige Temperatur auf der Oberseite des Bodens des Übergangs innerhalb kürzester Zeit überschritten wird.

Wenn nun, wie nach einem besonderen Merkmal der Erfindung vorgesehen ist, die Brandschutzeinlage oder Brandschutzauflage auf der dem Innenmantel angeordneten Seite einer derartigen wellen- oder faltenförmigen Zwischenlage angeordnet ist, dann ist die Gefahr, dass das Ascheskelett auf der Zwischenlage zusammenbricht, deutlich geringer. Dies insbesondere dann, wenn die Zwischenlage selbst feuerhemmend ausgebildet ist, wie dies an anderer Stelle bereits dargelegt worden ist. Die Brandschutzeinlage oder Brandschutzauflage selbst kann hierbei mit der balgartigen Zwischenlage verbunden sein, das heißt, dass zum Beispiel die Brandschutzeinlage als Kissen ausgebildet ist, das auf die Zwischenlage aufgenäht wird. Eine Brandschutzauflage kann durch Aufsprühen oder Auftragen mit einem Pinsel auf der Zwischenlage aufgebracht werden.

Der zuvor beschriebene Aufbau eines Balges, insbesondere im Bodenbereich des Balges unterhalb des Bodens des Übergangs, hat sich insbesondere bei einem sogenannten Positivwellenbalg als vorteilhaft herausgestellt. Bei einem solchen Positivwellenbalg sind der Innenmantel, der Außenmantel und die Zwischenlage zur Bildung einzelner Positivwellen nach außen, das heißt, in Richtung auf die Außenseite des Fahrzeugs zu bzw. von der Mittellängsachse des Fahrzeugs weg, gewölbt ausgebildet, wobei die Balgrahmen auf der Innenseite sind, das heißt, in Richtung zur Mittellängsachse des Fahrzeugs zu am Balg angeordnet sind. Von einem Negativwellenbalg spricht man, wenn die Wellen nach innen, das heißt, in Richtung der Mittellängsachse des Fahrzeugs gewölbt sind, wohingegen die Balgrahmen in Richtung der Außenseite des Fahrzeugs am Balg angeordnet sind.

Anhand der Zeichnungen wird die Erfindung nachstehend beispielhaft näher erläutert.
- Fig. 1: zeigt ein Gelenkfahrzeug in perspektivischer Darstellung;
- Fig. 2: zeigt beispielhaft zwei Wellen eines Wellenbalges mit auf der Zwischenlage aufliegender Brandschutzeinlage;
- Fig. 3: zeigt eine Darstellung gemäß Fig. 2, wobei der Außenmantel der Welle zerstört ist und die Brandschutzeinlage aufgebläht ist.

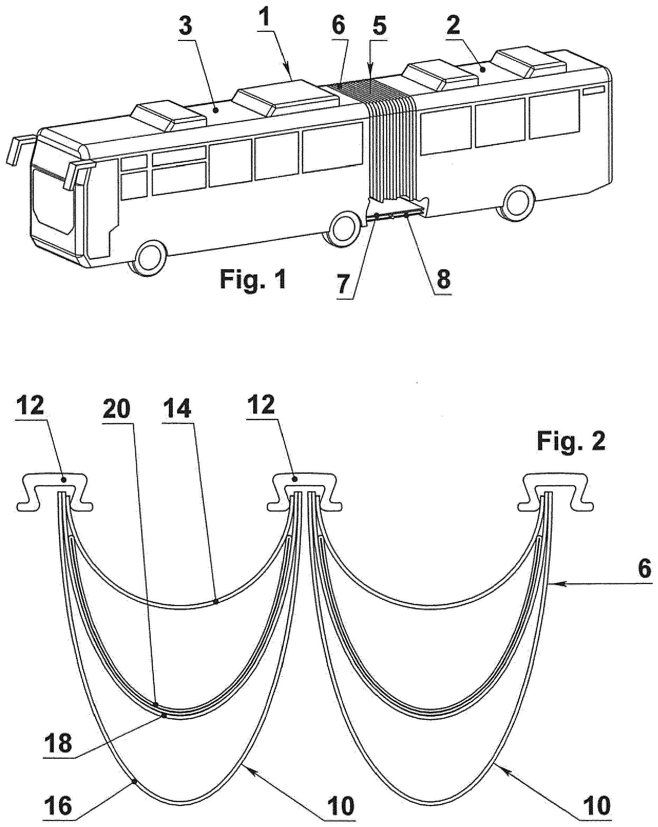

Fig. 1 zeigt ein Gelenkfahrzeug 1 mit den beiden Fahrzeugteilen 2, 3, die durch einen Übergang 5 mit einem Balg 6 miteinander in Verbindung stehen. Der Balg umgibt den Boden 7 sowie die gelenkige Verbindung 8 tunnel- oder röhrenförmig.

Die Ausbildung des Balges 6, insbesondere im Bodenbereich, ergibt sich in Anschauung von Fig. 2. Der Balg besteht im vorliegenden Fall aus einzelnen wellenförmigen Elementen 10, die durch Balgrahmen 12 miteinander in Verbindung stehen. Die wellenförmigen Elemente 10 umfassen einen Innenmantel 14 und einen Außenmantel 16, wobei beabstandet zwischen dem wellenförmigen Innenmantel und dem wellenförmigen Außenmantel die ebenfalls wellenförmig ausgebildete Zwischenlage 18 vorgesehen ist. Die wellenförmige Zwischenlage 18, die insbesondere aus einem feuerhemmenden Material z. B. auf Basis von Aramidfasern, Silikatfasern, Glasfasern und/oder Polybenzimidazolfasern ausgebildet ist, weist auf ihrer dem Innenmantel 14 zugewandten Seite eine Brandschutzeinlage 20 auf. Die Brandschutzeinlage 20 umfasst ein intumeszierendes, also feuerhemmendes, aufblähendes, flexibles Material, das im Handel käuflich zu erwerben ist.

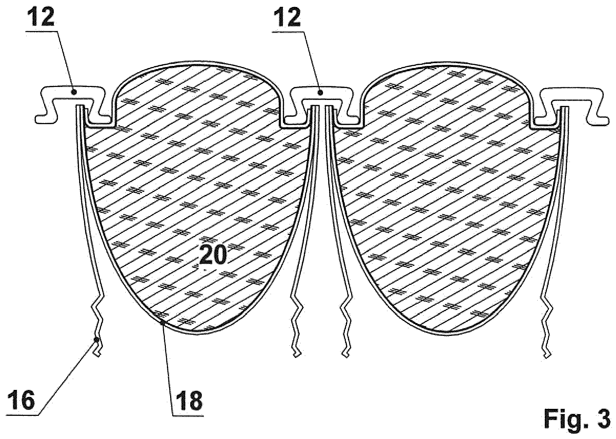

Fig. 3 zeigt nun einen Zustand der Wellen eines Balges, bei der der Außenmantel 16 aufgrund von Wärmeeinwirkung zerstört ist; die Brandschutzeinlage ist aufgebläht und bildet ein Ascheskelett. Da die Zwischenlage, wie dies bereits an anderer Stelle mehrfach erläutert worden ist, aus einem feuerhemmenden oder flammhemmenden Material ausgebildet ist, hält diese Zwischenlage 18 der Flammeinwirkung verhältnismäßig lange stand, sodass auch das intumeszierende Material ein Ascheskelett ausbilden kann, das relativ stabil ist, da es durch die Zwischenlage 18 gehalten wird. Das heißt, dass das Ascheskelett weiterhin seine Funktion als Dämmschicht aufrechterhalten kann. Insbesondere kann mit einem solchen Aufbau mit auf der Zwischenlage aufliegender, unter Druck blähfähiger und damit intumeszierender Brandschutzeinlage eine erhebliche Verzögerung bei der Aufheizung der Oberseite des Bodens des Übergangs bei Flammtemperaturen von 1.000° C erzielt werden. Gleiches gilt sinngemäß auch bei einer Brandschutzauflage, die auf die Zwischenlage beispielsweise aufgesprüht oder zum Beispiel mit einem Pinsel oder Kalander aufgetragen wird.

Die Erfindung ist nicht nur bei Positivwellenbälgen, sondern auch bei Negativwellenbälgen einsetzbar; von Negativwellenbälgen spricht man, wenn die Wölbung der einzelnen Wellen auf die Innenseite des Balges zugerichtet ist.

### Bezugszeichenliste:

- 1: Gelenkfahrzeug
- 2: Fahrzeugteil
- 3: Fahrzeugteil
- 5: Übergang
- 6: Balg
- 7: Boden des Übergangs
- 8: gelenkige Verbindung zwischen den Fahrzeugteilen
- 10: wellenförmiges Element
- 12: Balgrahmen
- 14: Innenmantel
- 16: Außenmantel
- 18: Zwischenlage
- 20: Brandschutzeinlage

## Patentansprüche

1. Balg (6) eines Übergangs (5) zwischen zwei gelenkig miteinander verbundener Fahrzeuge oder Balg (6) einer Fluggasttreppe oder -brücke, mit mehreren hintereinander angeordneten Falten oder Wellen, wobei die Falten oder Wellen des Balges (6) zumindest im Bodenbereich mindestens einen Innenmantel (14) und mindestens einen dazu beabstandet angeordneten Außenmantel (16) aufweisen, wobei zwischen Außen- und Innenmantel (16, 14) ein feuerhemmendes Material vorgesehen ist,
**dadurch gekennzeichnet,**
**dass** zwischen Innen- und Außenmantel (14, 16) der Wellen oder Falten des Balges (6) beabstandet zum Innen- und Außenmantel (14, 16) eine Zwischenlage (18) angeordnet ist, wobei die Zwischenlage (18) feuerhemmend ausgebildet ist.

2. Balg (6) eines Übergangs (5) zwischen zwei gelenkig miteinander verbundener Fahrzeuge oder Balg (6) einer Fluggasttreppe oder -brücke nach Anspruch 1,
**dadurch gekennzeichnet,**
**dass** die feuerhemmende Zwischenlage (18) als Brandschutzgewebe, -gewirk oder -gestrick ausgebildet ist.

3. Balg (6) eines Übergangs (5) zwischen zwei gelenkig miteinander verbundener Fahrzeuge oder Balg (6) einer Fluggasttreppe oder -brücke nach Anspruch 1,
**dadurch gekennzeichnet,**
**dass** die feuerhemmende Zwischenlage (18) als Drahtgeflecht ausgebildet ist.

4. Balg (6) eines Übergangs (5) zwischen zwei gelenkig miteinander verbundener Fahrzeuge oder Balg (6) einer Fluggasttreppe oder -brücke nach Anspruch 2,
**dadurch gekennzeichnet,**
**dass** die feuerhemmende Zwischenlage (18) als Aramidfaser-, Silikatfaser-, Glasfaser- und/oder Polybenzimidazolfaser- basiertes Gewebe, Gewirk oder Gestrick ausgebildet ist.

5. Balg (6) eines Übergangs (5) zwischen zwei gelenkig miteinander verbundener Fahrzeuge oder Balg (6) einer Fluggasttreppe oder -brücke nach einem der voranstehenden Ansprüche,
**dadurch gekennzeichnet,**
**dass** die Zwischenlage (18) eine Brandschutzauflage oder eine Brandschutzeinlage (20) aufweist.

6. Balg (6) eines Übergangs (5) zwischen zwei gelenkig miteinander verbundener Fahrzeuge oder Balg (6) einer Fluggasttreppe oder -brücke nach Anspruch 5,
**dadurch gekennzeichnet,**
**dass** die Brandschutzauflage oder Brandschutzeinlage (20) aufblähend, insbesondere unter Druckaufbau aufblähend, ausgebildet ist.

7. Balg (6) eines Übergangs (5) zwischen zwei gelenkig miteinander verbundener Fahrzeuge oder Balg (6) einer Fluggasttreppe oder -brücke nach einem der Ansprüche 5 oder 6,
**dadurch gekennzeichnet,**
**dass** die Brandschutzauflage oder Brandschutzeinlage (20) feuchtigkeitsresistent und/oder reingungsmittelresistent ausgebildet ist.

8. Balg (6) eines Übergangs (5) zwischen zwei gelenkig miteinander verbundener Fahrzeuge oder Balg (6) einer Fluggasttreppe oder -brücke nach einem der Ansprüche 6 oder 7,
**dadurch gekennzeichnet,**
**dass** die Brandschutzauflage oder Brandschutzeinlage (20) unter Bildung eines Ascheskeletts aufblähend ausgebildet ist.

9. Balg (6) eines Übergangs (5) zwischen zwei gelenkig miteinander verbundener Fahrzeuge oder Balg (6) einer Fluggasttreppe oder -brücke nach einem der Ansprüche 5 bis 8,
**dadurch gekennzeichnet,**
**dass** die Brandschutzauflage oder Brandschutzeinlage (20) mit der Zwischenlage verbunden ist.

10. Balg (6) eines Übergangs (5) zwischen zwei gelenkig miteinander verbundener Fahrzeuge oder Balg (6) einer Fluggasttreppe oder -brücke nach einem der Ansprüche 5 bis 9,
**dadurch gekennzeichnet,**
**dass** die Brandschutzauflage oder Brandschutzeinlage (20) auf der dem Innenmantel (14) zugeordneten Seite der Zwischenlage (18) angeordnet ist.

11. Balg (6) eines Übergangs (5) zwischen zwei gelenkig miteinander verbundener Fahrzeuge oder Balg (6) einer Fluggasttreppe oder -brücke nach einem der voranstehenden Ansprüche,
**dadurch gekennzeichnet,**
**dass** der Balg (6) zumindest im Bodenbereich als Positivwellenbalg ausgebildet ist.

12. Balg (6) eines Übergangs (5) zwischen zwei gelenkig miteinander verbundener Fahrzeuge oder Balg (6) einer Fluggasttreppe oder -brücke nach Anspruch 11,
**dadurch gekennzeichnet,**
**dass** der Innenmantel (14), der Außenmantel (16) und die Zwischenlage (18) zur Bildung einzelner Positivwellen in Richtung auf die Außenseite des Übergangs (5) gewölbt ausgebildet sind.

## Claims

1. Bellows (6) of a gangway (5) between two articulately connected vehicles or bellows (6) of a passenger boarding staircase or bridge with several successively arranged folds or corrugations, wherein the folds or corrugations of the bellows (6) comprise at least one inner jacket (14) and at least one outer jacket (16) arranged at a distance therefrom at least in the area of the floor, a fire-retardant material being provided between the outer and inner jackets (16, 14),
**characterized in that**
an intermediate layer (18) is arranged between the inner and outer jacket (14, 16) of the corrugations or folds of the bellows (6) at a distance from the inner and outer jacket (14, 16), wherein the intermediate layer (18) is designed to be fire-retardant.

2. Bellows (6) of a gangway (5) between two articulately connected vehicles or bellows (6) of a passenger boarding staircase or bridge according to claim 1,
**characterized in that**
the fire-retardant intermediate layer (18) is designed as a fire protection woven fabric, warp-knitted fabric or weft-knitted fabric.

3. Bellows (6) of a gangway (5) between two articulately connected vehicles or bellows (6) of a passenger boarding staircase or bridge according to claim 1,
**characterized in that**
the fire-retardant intermediate layer (18) is formed as wire mesh.

4. Bellows (6) of a gangway (5) between two articulately connected vehicles or bellows (6) of a passenger boarding staircase or bridge according to claim 2,
**characterized in that**
the fire-retardant intermediate layer (18) is formed as a woven, warp-knitted or weft-knitted fabric based on aramid fibers, silicate fibers, glass fibers and/or polybenzimidazole fibers.

5. Bellows (6) of a gangway (5) between two articulately connected vehicles or bellows (6) of a passenger boarding staircase or bridge according to one of the afore-mentioned claims,
**characterized in that**
the intermediate layer (18) has a fire protection cover or a fire protection insert (20).

6. Bellows (6) of a gangway (5) between two articulately connected vehicles or bellows (6) of a passenger boarding staircase or bridge according to claim 5,
**characterized in that**
the fire protection cover or fire protection insert (20) is designed to inflate, in particular to inflate under pressure build-up.

7. Bellows (6) of a gangway (5) between two articulately connected vehicles or bellows (6) of a passenger boarding staircase or bridge according to claim 5 or 6,
**characterized in that**
the fire protection cover or fire protection insert (20) is moisture-resistant and/or resistant to cleaning agents.

8. Bellows (6) of a gangway (5) between two articulately connected vehicles or bellows (6) of a passenger boarding staircase or bridge according to claim 6 or 7,
**characterized in that**
the fire protection cover or fire protection insert (20) is designed to inflate, forming an ash skeleton.

9. Bellows (6) of a gangway (5) between two articulately connected vehicles or bellows (6) of a passenger boarding staircase or bridge according to claim 5 to 8,
**characterized in that**
the fire protection cover or fire protection insert (20) is joined with the intermediate layer.

10. Bellows (6) of a gangway (5) between two articulately connected vehicles or bellows (6) of a passenger boarding staircase or bridge according to claim 5 to 9,
**characterized in that**
the fire protection cover or fire protection insert (20) is arranged on the side of the intermediate layer (18) related to the inner jacket (14).

11. Bellows (6) of a gangway (5) between two articulately connected vehicles or bellows (6) of a passenger boarding staircase or bridge according to one of the afore-mentioned claims,
**characterized in that**
the bellows (6) is designed as a positive wave bellows at least in the area of the floor.

12. Bellows (6) of a gangway (5) between two articulately connected vehicles or bellows (6) of a passenger boarding staircase or bridge according to claim 11,
**characterized in that**
the inner jacket (14), the outer jacket (16) and the intermediate layer (18) are curved towards the outer side of the gangway (5) to form individual positive waves.

## Revendications

1. Soufflet (6) d'un passage (5) entre deux véhicules reliés entre eux de manière articulée ou soufflet (6) d'un escalier ou d'une passerelle d'embarquement, avec plusieurs plis ou ondulations disposés les uns derrière les autres, où les plis ou ondulations du soufflet (6) présentent au moins une enveloppe intérieure (14) et au moins une enveloppe extérieure (16) disposée à distance de celle-ci au moins dans la région du sol, où un matériau ignifuge est prévu entre les enveloppes extérieure et intérieure (16, 14),
**caractérisé en ce qu'**
une couche intermédiaire (18) est disposée entre les enveloppes intérieure et extérieure (14, 16) des ondulations ou des plis du soufflet (6) à une distance des enveloppes intérieure et extérieure (14, 16), où la couche intermédiaire (18) est conçue pour être ignifuge.

2. Soufflet (6) d'un passage (5) entre deux véhicules reliés entre eux de manière articulée ou soufflet (6) d'un escalier ou d'une passerelle d'embarquement selon la revendication 1,
**caractérisé en ce que**
la couche intermédiaire ignifuge (18) prend la forme d'un tissu, d'un tricot trame ou d'un tricot chaîne de protection contre le feu.

3. Soufflet (6) d'un passage (5) entre deux véhicules reliés entre eux de manière articulée ou soufflet (6) d'un escalier ou d'une passerelle d'embarquement selon la revendication 1,
**caractérisé en ce que**
la couche intermédiaire ignifuge (18) prend la forme d'un treillis métallique.

4. Soufflet (6) d'un passage (5) entre deux véhicules reliés entre eux de manière articulée ou soufflet (6) d'un escalier ou d'une passerelle d'embarquement selon la revendication 2,
**caractérisé en ce que**
la couche intermédiaire ignifuge (18) prend la forme d'un tissu, d'un tricot trame ou d'un tricot maille à base de fibres d'aramide, de fibres de silicate, de fibres de verre et/ou de fibres de polybenzimidazole.

5. Soufflet (6) d'un passage (5) entre deux véhicules reliés entre eux de manière articulée ou soufflet (6) d'un escalier ou d'une passerelle d'embarquement selon l'une des revendications précédentes,
**caractérisé en ce que**
la couche intermédiaire (18) comprend un revêtement de protection contre le feu ou un insert de protection contre le feu (20).

6. Soufflet (6) d'un passage (5) entre deux véhicules reliés entre eux de manière articulée ou soufflet (6) d'un escalier ou d'une passerelle d'embarquement selon la revendication 5,
**caractérisé en ce que**
le revêtement de protection contre le feu ou l'insert de protection contre le feu (20) est conçu pour se gonfler, en particulier pour se gonfler sous l'effet d'une montée en pression.

7. Soufflet (6) d'un passage (5) entre deux véhicules reliés entre eux de manière articulée ou soufflet (6) d'un escalier ou d'une passerelle d'embarquement selon l'une des revendications 5 ou 6,
**caractérisé en ce que**
le revêtement de protection contre le feu ou l'insert de protection contre le feu (20) est conçu pour résister à l'humidité et/ou aux détergents.

8. Soufflet (6) d'un passage (5) entre deux véhicules reliés entre eux de manière articulée ou soufflet (6) d'un escalier ou d'une passerelle d'embarquement selon l'une des revendications 6 ou 7,
**caractérisé en ce que**
le revêtement de protection contre le feu ou l'insert de protection contre le feu (20) est conçu pour se gonfler, formant un squelette de cendres.

9. Soufflet (6) d'un passage (5) entre deux véhicules reliés entre eux de manière articulée ou soufflet (6) d'un escalier ou d'une passerelle d'embarquement selon l'une des revendications 5 à 8,
**caractérisé en ce que**
le revêtement de protection contre le feu ou l'insert de protection contre le feu (20) est relié à la couche intermédiaire.

10. Soufflet (6) d'un passage (5) entre deux véhicules reliés entre eux de manière articulée ou soufflet (6) d'un escalier ou d'une passerelle d'embarquement selon l'une des revendications 5 à 9,
**caractérisé en ce que**
le revêtement de protection contre le feu ou l'insert de protection contre le feu (20) est disposé sur le côté de la couche intermédiaire (18) associé à l'enveloppe intérieure (14).

11. Soufflet (6) d'un passage (5) entre deux véhicules reliés entre eux de manière articulée ou soufflet (6) d'un escalier ou d'une passerelle d'embarquement selon l'une des revendications précédentes,
**caractérisé en ce que**
le soufflet (6) est conçu comme un soufflet à ondulations positives au moins dans la région du sol.

12. Soufflet (6) d'un passage (5) entre deux véhicules reliés entre eux de manière articulée ou soufflet (6) d'un escalier ou d'une passerelle d'embarquement selon la revendication 11,
**caractérisé en ce que**
l'enveloppe intérieure (14), l'enveloppe extérieure (16) et la couche intermédiaire (18) sont courbées vers le côté extérieur du passage (5) pour former des ondulations positives individuelles.
